# EUROPÄISCHE PATENTSCHRIFT

(11) **EP 3 542 409 B1**
(45) Veröffentlichungstag und Bekanntmachung des Hinweises auf die Patenterteilung: **07.06.2023**
(21) Anmeldenummer: 17781071.0
(22) Anmeldetag: 04.10.2017
(51) Int. Cl.: H01M 8/0202, H01M 8/0215, H01M 8/0236, H01M 8/2483, H01M 8/2418, H01M 8/2484

(54) **BRENNSTOFFZELLENVORRICHTUNG**
FUEL CELL DEVICE
DISPOSITIF FORMANT PILE À COMBUSTIBLE

(30) Priorität: 16.11.2016 DE 102016222537
(43) Veröffentlichungstag der Anmeldung: 25.09.2019
(73) Patentinhaber: Robert Bosch GmbH, 70442 Stuttgart (DE)
(72) Erfinder: FISCHER, Christopher, 70439 Stuttgart (DE); HAEFFELIN, Andreas, 71665 Vaihingen (DE)
(86) Internationale Anmeldenummer: PCT/EP2017/075159
(87) Internationale Veröffentlichungsnummer: WO 2018/091194

(56) Entgegenhaltungen:
- EP-A2- 2 557 624
- WO-A1-2013/053842
- DE-A1- 10 151 601
- US-A1- 2008 057 381

## Beschreibung

### Stand der Technik

Es ist bereits ein Brennstoffzellenstack mit zumindest zwei übereinander angeordneten planaren Brennstoffzelleneinheiten, welche jeweils zumindest eine Zellebene mit einer Mehrzahl von zumindest im Wesentlichen in einer Ebene angeordneten und elektrisch miteinander verschalteten Einzelzellen aufweist, vorgeschlagen worden.

### Offenbarung der Erfindung

Die Erfindung geht aus von einem Brennstoffzellenstack mit zumindest zwei übereinander angeordneten planaren Brennstoffzelleneinheiten, welche jeweils zumindest eine Zellebene mit einer Mehrzahl von zumindest im Wesentlichen in einer Ebene angeordneten und elektrisch miteinander verschalteten Einzelzellen aufweist.

Es wird vorgeschlagen, dass die Zellebenen der Brennstoffzelleneinheiten elektrisch miteinander verschaltet sind.

Unter einem "Brennstoffzellenstack" soll in diesem Zusammenhang insbesondere ein, insbesondere funktionstüchtiger, Bestandteil, insbesondere eine Konstruktions- und/oder Funktionskomponente, eines Brennstoffzellensystems verstanden werden. Unter einem "Brennstoffzellensystem" soll in diesem Zusammenhang insbesondere ein System zu einer stationären und/oder mobilen Gewinnung, insbesondere elektrischer und/oder thermischer Energie, unter Verwendung zumindest einer Brennstoffzelleneinheit verstanden werden. Unter einer "Brennstoffzelleneinheit" soll in diesem Zusammenhang insbesondere eine Einheit mit zumindest einer Brennstoffzelle verstanden werden, welche dazu vorgesehen ist, zumindest eine chemische Reaktionsenergie zumindest eines, insbesondere kontinuierlich zugeführten, Brenngases, insbesondere Wasserstoff, und zumindest eines Oxidationsmittels, insbesondere Sauerstoff, insbesondere in elektrische Energie umzuwandeln. Die zumindest eine Brennstoffzelle kann insbesondere als Festoxid-Brennstoffzelle (SOFC) ausgebildet sein. Ferner kann die Brennstoffzelleneinheit insbesondere passive Elemente, insbesondere zu einer Gasführung und/oder -leitung und/oder zu einer Montage der Brennstoffzellenvorrichtung, umfassen. Vorzugsweise umfasst der Brennstoffzellenstack eine Vielzahl von miteinander verschalteten Brennstoffzelleneinheiten. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einer "Zellebene" soll insbesondere ein, insbesondere zumindest im Wesentlichen von einer Funktionsschicht gebildeter, elektrochemisch aktiver, insbesondere zumindest im Wesentlichen planarer Bereich verstanden werden. Unter einer "Einzelzelle" soll in diesem Zusammenhang ein in sich funktionsfähiger elektrochemisch aktiver Teilbereich der Zellebene verstanden werden. Insbesondere sind die Einzelzellen vorzugsweise mittels eines keramischen Interkonnektors elektrisch in Reihe geschaltet. Unter einer "Funktionsschicht" soll in diesem Zusammenhang insbesondere eine Schicht verstanden werden, welche insbesondere zumindest eine Anode und zumindest eine Kathode sowie zumindest einen zwischen der zumindest einen Anode und der zumindest einen Kathode angeordneten Elektrolyt aufweist. Die Brennstoffzelleneinheiten weisen jeweils eine Gasleiteinheit auf, welche zu einer Führung eines Brenngasstroms und/oder eines Oxidationsgasstroms entlang der Zellebenen vorgesehen ist. Insbesondere sind die Gasleiteinheiten dazu vorgesehen, einen Brenngasstrom entlang einer Anodenseite einer Zellebene und einen Oxidationsgasstrom, insbesondere einen Luftstrom, entlang einer Kathodenseite einer Zellebene zu führen. Insbesondere weisen die Gasleiteinheiten jeweils eine Mehrzahl von Gasleitelementen, insbesondere Gasleitstegen, auf. Die Gasleiteinheiten weisen insbesondere eine Mehrzahl von zumindest im Wesentlichen parallel zueinander verlaufenden Brenngasleitelementen auf, welche insbesondere jeweils an einer Anodenseite der Zellebenen angeordnet sind. Insbesondere weisen die Gasleiteinheiten jeweils eine Mehrzahl von insbesondere zumindest im Wesentlichen parallel zueinander verlaufenden Oxidationsgasleitelementen auf, welche insbesondere jeweils an einer Kathodenseite der Zellebene angeordnet sind. Die Gasleiteinheiten sind ferner insbesondere dazu vorgesehen, die Zellebenen in eine Mehrzahl von Zellstreifen zu unterteilen, welche jeweils zumindest eine Einzelzelle umfassen. Unter einem "Zellstreifen" soll in diesem Zusammenhang insbesondere ein insbesondere von zumindest zwei Gasleitelementen der Gasleiteinheiten begrenzter geometrischer Bereich der Zellebenen verstanden werden, welcher von einem zumindest im Wesentlichen richtungskonstanten von der Gasleiteinheit geführten Brenngasstrom oder Oxidationsgasstrom überströmt wird. Die Einzelzellen eines Zellstreifens sind insbesondere elektrisch in Reihe geschaltet.

Die Zellebenen der Brennstoffzelleneinheit sind elektrisch zumindest teilweise seriell und/oder parallel miteinander verschaltet. Insbesondere sind die Zellebenen der Brennstoffzelleneinheit mittels einer Mehrzahl von elektrisch leitfähigen Verbindungselementen zu einer elektrischen Einheit miteinander verschaltet.

Durch eine derartige Ausgestaltung kann ein gattungsgemäßer Brennstoffzellenstack mit verbesserten Eigenschaften hinsichtlich einer Modularität und/oder hinsichtlich Leistungsskalierung bereitgestellt werden.

Ferner wird vorgeschlagen, dass die Zellebenen jeweils zumindest zwei elektrische Leitstreifen aufweisen, welche jeweils mit zumindest einem elektrischen Leitstreifen zumindest einer weiteren Zellebene elektrisch verbunden sind. Unter einem "elektrischen Leitstreifen" soll in diesem Zusammenhang insbesondere ein elektrisch leitfähiger Bereich einer Zellebene verstanden werden, welcher dazu vorgesehen ist, einen elektrischen Pol der Zellebene auszubilden. Insbesondere weist jede Zellebene jeweils zumindest einen Leitstreifen auf, welcher dazu vorgesehen ist, einen positiven elektrischen Pol der Zellebene auszubilden. Die Zellebenen weisen insbesondere jeweils zumindest einen Leitstreifen auf, weleher dazu vorgesehen ist, einen negativen elektrischen Pol der Zellebene auszubilden. Vorzugsweise weist der Brennstoffzellenstack eine Mehrzahl von Stromableitern auf, welche dazu vorgesehen sind, die Zellebenen der Brennstoffzelleneinheiten elektrisch leitend miteinander zu verbinden. Unter einem "Stromableiter" soll in diesem Zusammenhang insbesondere ein elektrischer Leiter verstanden werden, welcher dazu vorgesehen ist, eine elektrische Leistung von einer Zellebene abzugreifen und/oder zumindest zwei Zellebenen elektrisch parallel und/oder seriell miteinander zu verschalten. Insbesondere sind die Stromableiter zu einer elektrisch leitenden Verbindung mit den Leitstreifen der Zellebenen vorgesehen. Insbesondere können die Stromableiter mittels eines Löt-, Schweiß- und/oder Pressprozesses mit den Leitstreifen der Zellebenen verbunden sein. Die Stromableiter können insbesondere zumindest teilweise als Metallbleche, Metallstifte, Metallbänder, Metalldrähte und/oder Metalllitzen ausgebildet sein. Eine Materialstärke der Stromableiter kann in Abhängigkeit von den jeweiligen Anforderungen, insbesondere in Abhängigkeit von einer Stromstärke eines zu leitenden Stroms, variiert werden. Die Stromableiter können insbesondere zumindest im Wesentlichen aus Nickel, einem ferritischen Hochtemperatur Edelstahl, beispielsweise Crofer 22 H oder Crofer 22 APU, einer korrosionsbeständigen Nickelbasislegierung, beispielsweise Inconel 600, und/oder Platin bestehen. Die Stromableiter können insbesondere zumindest teilweise innerhalb und/oder außerhalb des Brennstoffzellenstacks verlaufen. Hierdurch kann eine vorteilhaft einfache und/oder zuverlässige elektrische Verschaltung der Zellebenen der Brennstoffzelleneinheiten innerhalb des Brennstoffzellenstacks erfolgen.

Des Weiteren wird vorgeschlagen, dass der Brennstoffzellenstack eine Mehrzahl von Stromableitern aufweist, welche dazu vorgesehen sind, die Zellebenen der Brennstoffzelleneinheiten elektrisch leitend miteinander zu verbinden und welche zumindest teilweise in zumindest einem Brenngaskanal und/oder in zumindest einem Oxidationsgaskanal verlaufen. Vorzugsweise weisen die Brennstoffzelleneinheiten in ihren Randbereichen Ausnehmungen auf, welche in einem montierten Zustand zu zumindest einem Brenngaskanal und/oder zumindest einem Oxidationsgaskanal verbunden sind, wobei Stromableiter, welche dazu vorgesehen sind, die Zellebenen der Brennstoffzelleneinheiten elektrisch leitend miteinander zu verbinden, zumindest teilweise in zumindest einem Brenngaskanal und/oder in zumindest einem Oxidationsgaskanal verlaufen. Insbesondere bestehen innerhalb eines Brenngaskanals verlaufende Stromableiter zumindest im Wesentlichen aus einem insbesondere im Wesentlichen reduktionsbeständigen Material. Insbesondere bestehen innerhalb eines Brenngaskanals verlaufende Stromableiter zumindest im Wesentlichen aus Nickel. Insbesondere bestehen innerhalb eines Oxidationsgaskanals verlaufende Stromableiter zumindest im Wesentlichen aus einem insbesondere im Wesentlichen oxidationsbeständigen Material. Innerhalb eines Oxidationsgaskanals verlaufende Stromableiter bestehen insbesondere zumindest im Wesentlichen aus einem ferritischen Hochtemperatur Edelstahl, beispielsweise Crofer 22 H oder Crofer 22 APU, einer korrosionsbeständigen Nickelbasislegierung und/oder Platin. Hierdurch kann vorteilhaft eine Führung der Stromableiter innerhalb des Brennstoffzellenstacks erfolgen.

Zudem wird vorgeschlagen, dass die Brennstoffzelleneinheiten jeweils ein erstes plattenartiges Element und zumindest ein zweites plattenartiges Element aufweisen, welche gemeinsam einen Gasraum zumindest im Wesentlichen definieren, wobei die Stromableiter zumindest teilweise zwischen den plattenartigen Elementen angeordnet sind. Unter einem "plattenartigen Element" soll insbesondere ein räumliches Element verstanden werden, welches in einer Abwicklung in einer Ebene betrachtet in einem Querschnitt senkrecht zur Ebene eine unrunde Querschnittsfläche aufweist und senkrecht zur Ebene eine insbesondere zumindest im Wesentlichen gleichbleibende Materialstärke aufweist, die weniger als 50 %, vorzugsweise weniger als 25 % und besonders bevorzugt weniger als 10 % einer Flächenerstreckung des räumlichen Elements parallel zur Ebene, insbesondere einer kleinsten Flächenerstreckung des Elements parallel zur Ebene, beträgt. Die plattenartigen Elemente können insbesondere mittels einer Sinterverbindung miteinander verbunden sein. Die plattenartigen Elemente sind vorzugsweise zumindest im Wesentlichen von einem keramischen Material gebildet. Insbesondere bestehen die plattenartigen Elemente mit einem Massenanteil von zumindest 75 %, vorteilhaft von zumindest 85 % und vorzugsweise von zumindest 95 % aus dem Material. Unter einem "keramischen Material" soll in diesem Zusammenhang insbesondere ein anorganisches, nichtmetallisches Material verstanden werden. Insbesondere kann das zumindest eine keramische Material zumindest teilweise kristallin sein. Unter "nichtmetallisch" soll in diesem Zusammenhang insbesondere verstanden werden, dass das zumindest eine keramische Material zumindest weitestgehend frei von insbesondere auf metallischen Bindungen beruhenden, metallischen Eigenschaften ist, jedoch Metallverbindungen, wie beispielsweise Metalloxide und/oder -silikate, umfassen kann. Das keramische Material kann insbesondere zumindest im Wesentlichen von einer Forsteritkeramik gebildet sein. Insbesondere sind das erste plattenartige Element und das zweite plattenartige Element aus einem zumindest weitgehend identischen keramischen Material ausgebildet. Darunter, dass das erste plattenartige Element und das zweite plattenartige Element zumindest im Wesentlichen aus einem "zumindest weitgehend identischen" keramischen Material ausgebildet sind, soll in diesem Zusammenhang insbesondere verstanden werden, dass das keramische Material des ersten plattenartigen Elements in seiner stofflichen Zusammensetzung zumindest weitgehend und vorzugsweise exakt dem keramischen Material des zweiten plattenartigen Elements entspricht. Insbesondere weisen das erste plattenartige Elemente und das zweite plattenartige Elemente einen zumindest im Wesentlichen identischen Wärmeausdehnungskoeffizienten auf. Insbesondere weicht der Wärmeausdehnungskoeffizient, insbesondere ein Längenausdehnungskoeffizienten und/oder ein Raumausdehnungskoeffizienten, des ersten plattenartigen Elements, insbesondere zumindest eines Herstellungsmaterials des ersten plattenartigen Elements, um weniger als 15 %, insbesondere um weniger als 10 %, vorzugsweise um weniger als 5 % und besonders bevorzugt um weniger als 1 % von einem Wärmeausdehnungskoeffizient, insbesondere einem Längenausdehnungskoeffizienten und/oder einem Raumausdehnungskoeffizienten, des zweiten plattenartigen Elements, insbesondere zumindest eines Herstellungsmaterials des zweiten plattenartigen Elements, ab.

Unter einem "Gasraum" soll insbesondere ein räumlicher Bereich verstanden werden, der zumindest teilweise und vorzugsweise zumindest im Wesentlichen allseitig, insbesondere abgesehen von Zuleitungen und/oder Ableitungen, von einer einer sichtbaren Außenfläche gegenüberliegenden, insbesondere zumindest teilweise nicht sichtbaren, Innenfläche der Brennstoffzelleneinheit begrenzt ist. Darunter, dass die plattenartigen Elemente gemeinsam den Gasraum "zumindest im Wesentlichen definieren" soll insbesondere verstanden werden, dass eine gedachte, den zumindest einen Gasraum umgebende, geschlossene Hüllfläche zu zumindest 80 %, vorzugsweise zu zumindest 85 %, vorteilhaft zu zumindest 90 % und besonders vorteilhaft zu zumindest 95 % von einer durch die plattenartigen Elemente gebildeten äußeren Hülle bedeckt ist.

Das erste plattenartige Element weist insbesondere einen zumindest im Wesentlichen porösen Bereich auf. Insbesondere ist der poröse Bereich offen porös ausgebildet. Unter einem "porösen Bereich" soll in diesem Zusammenhang insbesondere ein Bereich verstanden werden, welcher Hohlräume aufweist, die insbesondere fluidtechnisch untereinander und/oder mit einer Umgebung in Verbindung stehen. Insbesondere ist der poröse Bereich zur Zuführung zumindest eines zweiten, insbesondere gasförmigen Reaktanten, vorzugsweise Sauerstoff oder Luft, vorgesehen. Insbesondere ist jeweils eine Funktionsschicht einer Brennstoffzelleneinheit auf dem porösen Bereich angeordnet. Ferner weist das erste plattenartige Element insbesondere zumindest einen im Wesentlichen gasdichten Bereich auf, welcher den porösen Bereich in Umfangsrichtung zumindest im Wesentlichen vollständig umschließt. Insbesondere ist der gasdichte Bereich einstückig mit dem porösen Bereich des ersten plattenartigen Elements ausgebildet. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Das zweite plattenartige Element ist insbesondere zumindest im Wesentlichen gasdicht ausgebildet. Insbesondere sind die plattenartigen Elemente mittels eines Sinterverfahrens miteinander verbunden, wobei die Stromableiter während des Sintervorgangs bereits zwischen den plattenartigen Elementen angeordnet sind. Hierdurch kann eine vorteilhafte mechanische Fixierung der Stromableiter zwischen den plattenartigen Elementen erreicht werden.

In einer Ausgestaltung der Erfindung wird vorgeschlagen, dass die Brennstoffzelleneinheiten derart angeordnet sind, dass jeweils unterschiedliche elektrische Pole der Brennstoffzelleneinheiten übereinanderliegen. Hierdurch kann vorteilhaft einfach eine serielle Verschaltung der Brennstoffzelleneinheiten erfolgen. Alternativ können die Brennstoffzelleneinheiten derart angeordnet sein, dass jeweils gleiche elektrische Pole der Brennstoffzelleneinheiten übereinanderliegen. Hierdurch kann vorteilhaft einfach eine parallele Verschaltung der Brennstoffzelleneinheiten erfolgen.

Ferner wird eine Brennstoffzelleneinheit für einen erfindungsgemäßen Brennstoffzellenstack vorgeschlagen, welche zumindest eine Zellebene mit einer Mehrzahl von zumindest im Wesentlichen in einer Ebene angeordneten und elektrisch miteinander verschalteten Einzelzellen aufweist.

Zudem wird ein Brennstoffzellensystem mit zumindest zwei erfindungsgemäßen Brennstoffzellenstacks vorgeschlagen. Insbesondere sind die Brennstoffzellenstacks elektrisch und/oder fluidtechnisch verschaltet. Insbesondere sind die Brennstoffzellenstacks elektrisch parallel und/oder seriell verschaltet. Hierdurch kann auf einfache Weise ein Brennstoffzellensystem mit einer vorteilhaft hohen Leistung realisiert werden.

Der erfindungsgemäße Brennstoffzellenstack soll hierbei nicht auf die oben beschriebene Anwendung und Ausführungsform beschränkt sein. Insbesondere kann die erfindungsgemäße Brennstoffzellenvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Teilschnittdarstellung einer Brennstoffzelleneinheit, welche ein erstes keramisches plattenartiges Element und ein zweites keramisches plattenartiges Element aufweist,
- Fig. 2: eine schematische Ansicht einer Zellebene der Brennstoffzelleneinheit aus Figur 1 mit einer Gasleiteinheit, welche einen Brenngasstrom und einen Oxidationsgasstrom in einer Mehrzahl von Strömungen führt,
- Fig. 3: eine Teilschnittdarstellung eines Brennstoffzellenstacks mit fünf seriell miteinander verschalteten Brennstoffzelleneinheiten gemäß Figur 1,
- Fig. 4: eine schematische Darstellung eines Brennstoffzellensystems mit vier miteinander verschalteten Brennstoffzellenstacks
- Fig. 5: eine schematische Darstellung eines alternativen Brennstoffzellensystems mit vier miteinander verschalteten Brennstoffzellenstacks und
- Fig. 6: eine Teilschnittdarstellung eines Brennstoffzellenstacks mit fünf parallel miteinander verschalteten Brennstoffzelleneinheiten gemäß Figur 1.

### Beschreibung der Ausführungsbeispiele

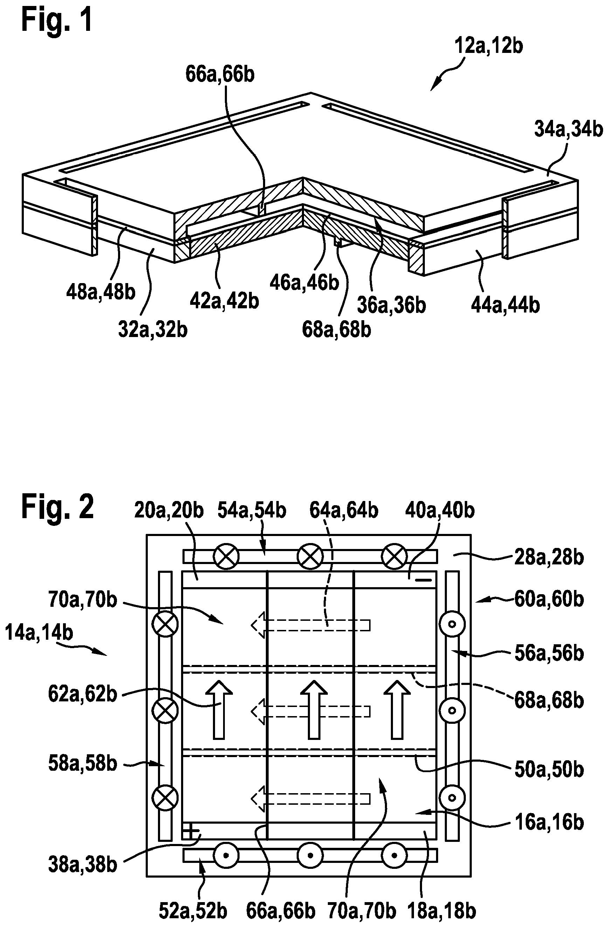

Figur 1 zeigt eine Teilschnittdarstellung einer Brennstoffzelleneinheit 12a, 12b. Die Brennstoffzelleneinheit 12a, 12b weist zwei plattenartige Elemente 32a, 32b, 34a, 34b auf, welche einen Gasraum 36a, 36b definieren. Der Gasraum 36a, 36b ist dazu vorgesehen, in zumindest einem Betriebszustand zumindest ein Brenngas, insbesondere Wasserstoff, aufzunehmen. Die plattenartigen Elemente 32a, 32b, 34a, 34b sind zumindest im Wesentlichen von einem keramischen Material gebildet.

Ein erstes plattenartiges Element 32a, 32b weist einen porösen Bereich 42a, 42b auf. Insbesondere ist der poröse Bereich 42a, 42b von einem porösen Forsteritmaterial gebildet. Ferner weist das erste plattenartige Element 32a, 32b einen im Wesentlichen gasdichten Bereich 44a, 44b auf, welcher den porösen Bereich 42a, 42b in Umfangsrichtung vollständig umschließt. Der gasdichte Bereich 44a, 44b ist insbesondere von einem dichten Forsteritmaterial gebildet. Die Brennstoffzelleneinheit 12a, 12b weist des Weiteren eine Funktionsschicht 46a, 46b auf, welche auf dem porösen Bereich 42a, 42b des ersten plattenartigen Elements 32a, 32b angeordnet ist. Die Funktionsschicht 46a, 46b weist, hier nicht im Detail dargestellt, eine Anode, eine Kathode und einen zwischen der Anode und der Kathode angeordneten Elektrolyt auf. Die Funktionsschicht 46a, 46b ist mit ihrer Kathodenseite auf dem porösen Bereich 42a, 42b angeordnet. Die Funktionsschicht 46a ist umlaufend von einem Rahmen 48a, 48b umgeben, welcher insbesondere von einem gasdichten keramischen Material gebildet ist. Ein Oxidationsgas, insbesondere Sauerstoff oder Luft, wird der Funktionsschicht 46a, 46b in einem Betriebszustand über den porösen Bereich 42a, 42b des ersten plattenartigen Elements 32a, 32b zugeführt. Das zweite plattenartige Element 34a, 34b ist zumindest im Wesentlichen gasdicht ausgebildet. Das zweite plattenartige Element 34a, 34b ist insbesondere vollständig von einem dichten Forsteritmaterial gebildet. Das erste plattenartige Element 32a, 32b und das zweite plattenartige Element 34a, 34b sind insbesondere mittels einer Sinterverbindung miteinander verbunden.

Figur 2 zeigt eine beispielhafte schematische Ansicht einer Zellebene 14a, 14b der Brennstoffzelleneinheit 12a, 12b. Die Zellebene 14a, 14b weist eine Mehrzahl von zumindest im Wesentlichen in einer Ebene angeordneten und elektrisch miteinander verschalteten Einzelzellen 16a, 16b auf. Die Einzelzellen 16a, 16b sind mittels keramischer Interkonnektoren 50a, 50b elektrisch in Reihe geschaltet. In einem Randbereich 28a, 28b weist die Brennstoffzelleneinheit 12a, 12b jeweils einen Brenngaszufluss 52a, 52b, einen Brenngasabfluss 54a, 54b, einen Oxidationsgaszufluss 56a, 56b und einen Oxidationsgasabfluss 58a, 58b auf. Die Brennstoffzelleneinheit 12a, 12b weist eine Gasleiteinheit 60a, 60b auf, welche zu einer Führung eines Brenngasstroms 62a, 62b und eines Oxidationsgasstroms 64a, 64b entlang der Zellebene 14a, 14b vorgesehen ist. Die Gasleiteinheit 60a, 60b weist eine Mehrzahl von parallel verlaufenden Brenngasleitelementen 66a, 66b auf. Die Brenngasleitelemente 66a, 66b sind zumindest im Wesentlichen stegförmig ausgebildet. Die Brenngasleitelemente 66a, 66b sind einstückig mit dem zweiten plattenartigen Element 34a, 34b ausgebildet. Die Brenngasleitelemente 66a, 66b sind auf einer Anodenseite der Funktionsschicht 46a, 46b angeordnet. Ferner weist die Gasleiteinheit 60a, 60b eine Mehrzahl von parallel verlaufenden Oxidationsgasleitelementen 68a, 68b auf. Die Oxidationsgasleitelemente 68a, 68b sind zumindest im Wesentlichen stegförmig ausgebildet. Die Oxidationsgasleitelemente 68a, 68b sind einstückig mit dem ersten plattenartigen Element 32a, 32b ausgebildet. Die Oxidationsgasleitelemente 68a, 68b sind auf einer Kathodenseite der Funktionsschicht 46a, 46b angeordnet. Die Brenngasleitelemente 66a, 66b und die Oxidationsgasleitelemente 68a, 68b unterteilen die Zellebene 14a, 14b in eine Mehrzahl von Zellstreifen 70a, 70b, welche jeweils zumindest eine Einzelzelle 16a, 16b umfassen. Die Gasleiteinheit 60a, 60b unterteilt die Zellebene 14a, 14b anodenseitig und kathodenseitig beispielhaft in jeweils drei Zellstreifen 70a, 70b. Ferner weist die Zellebene 14a, 14b zwei elektrische Leitstreifen 18a, 18b, 20a, 20b auf, welche jeweils dazu vorgesehen sind, jeweils einen elektrischen Pol 38a, 38b, 40a, 40b der Zellebene 14a, 14b auszubilden. Die Zellebene 14a, 14b weist einen Leitstreifen 18a, 18b auf, welcher dazu vorgesehen ist, einen positiven elektrischen Pol 38a, 38b der Zellebene 14a, 14b auszubilden. Die Zellebene 14a, 14b weist einen Leitstreifen 20a, 20b auf, welcher dazu vorgesehen ist, einen negativen elektrischen Pol 40a, 40b der Zellebene 14a, 14b auszubilden.

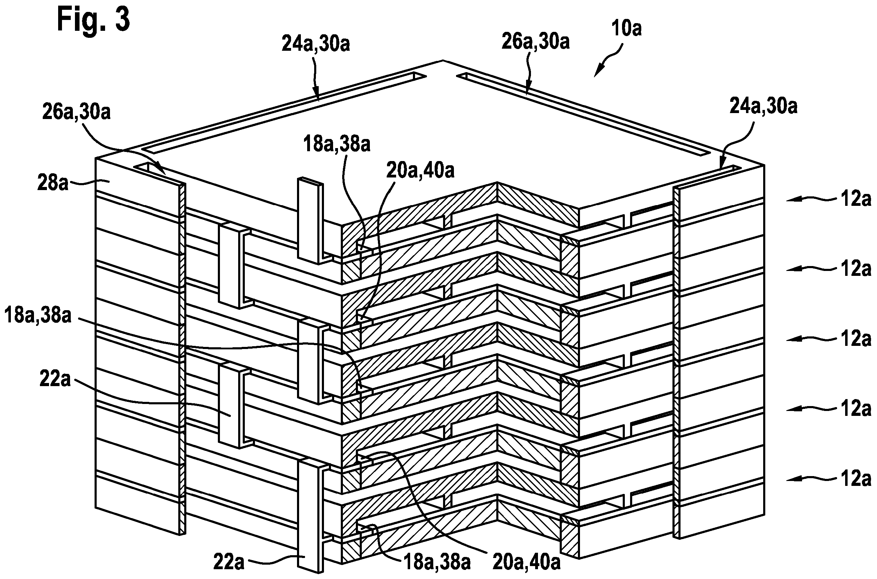

Figur 3 zeigt eine Teilschnittdarstellung eines Brennstoffzellenstacks 10a. Der Brennstoffzellenstack 10a umfasst hier beispielhaft fünf identisch ausgebildete Brennstoffzelleneinheiten 12a. Die Brennstoffzelleneinheiten 12a sind elektrisch und fluidtechnisch miteinander verschaltet. Die Brennstoffzelleneinheiten 12a weisen in Randbereichen 28a Ausnehmungen 30a auf, welche innerhalb des Brennstoffzellenstacks 10a zu Brenngaskanälen 24a oder Oxidationsgaskanälen 26a verbunden sind. Die Zellebenen 14a der Brennstoffzelleneinheiten 12a sind elektrisch miteinander verschaltet. Der Brennstoffzellenstack 10a weist eine Mehrzahl von Stromableitern 22a auf, welche zumindest teilweise in zumindest einem Brenngaskanal 24a und/oder in zumindest einem Oxidationsgaskanal 26a verlaufen können. Alternativ können die Stromableiter 22a auch zumindest teilweise außerhalb der Brennstoffzelleneinheiten 12a verlaufen. Die Stromableiter 22a sind zumindest teilweise zwischen den plattenartigen Elementen 32a, 34a der Brennstoffzelleneinheiten 12a angeordnet. Die Stromableiter 22a sind insbesondere bereits während eines Sintervorgangs zur Verbindung der plattenartigen Elemente 32a, 34a zwischen den plattenartigen Elementen 32a, 34a angeordnet.

Hierdurch kann eine vorteilhafte mechanische Fixierung der Stromableiter 22a erreicht werden. Die Stromableiter 22a sind elektrisch leitenden mit den Leitstreifen 18a, 20a der Zellebenen 14a verbunden. Insbesondere können die Stromableiter 22a mittels eines Löt-, Schweiß- und/oder Pressprozesses mit den Leitstreifen 18a ,20a der Zellebenen 14a verbunden sein. Die Stromableiter 22a können insbesondere zumindest teilweise als Metallbleche, Metallstifte, Metallbänder, Metalldrähte und/oder Metalllitzen ausgebildet sein. Innerhalb eines Brenngaskanals 24a verlaufende Stromableiter bestehen zumindest im Wesentlichen aus einem insbesondere im Wesentlichen reduktionsbeständigen Material. Innerhalb eines Brenngaskanals 24a verlaufende Stromableiter 22a können insbesondere zumindest im Wesentlichen aus Nickel bestehen. Innerhalb eines Oxidationsgaskanals 26a oder außerhalb der Brennstoffzelleneinheit 12a verlaufende Stromableiter bestehen zumindest im Wesentlichen aus einem insbesondere im Wesentlichen oxidationsbeständigen Material. Innerhalb eines Oxidationsgaskanals 26a oder außerhalb der Brennstoffzelleneinheiten 12a verlaufende Stromableiter 22a können insbesondere zumindest im Wesentlichen aus einem ferritischen Hochtemperatur-Edelstahl, beispielsweise Crofer 22 H oder Crofer 22 APU, einer korrosionsbeständigen Nickelbasislegierung und/oder Platin bestehen. Die Brennstoffzelleneinheiten 12a sind derart innerhalb des Brennstoffzellenstacks 10a angeordnet, dass jeweils unterschiedliche elektrische Pole 38a, 40a der Brennstoffzelleneinheiten 12a übereinanderliegen. Benachbarte Brennstoffzelleneinheiten 12a sind jeweils um 180° gedreht zueinander angeordnet, sodass positive Pole 38a und negative Pole 40a der Brennstoffzelleneinheit 12a im Wechsel übereinander angeordnet sind. Die Brennstoffzelleneinheiten 12a sind elektrisch seriell miteinander verschaltet.

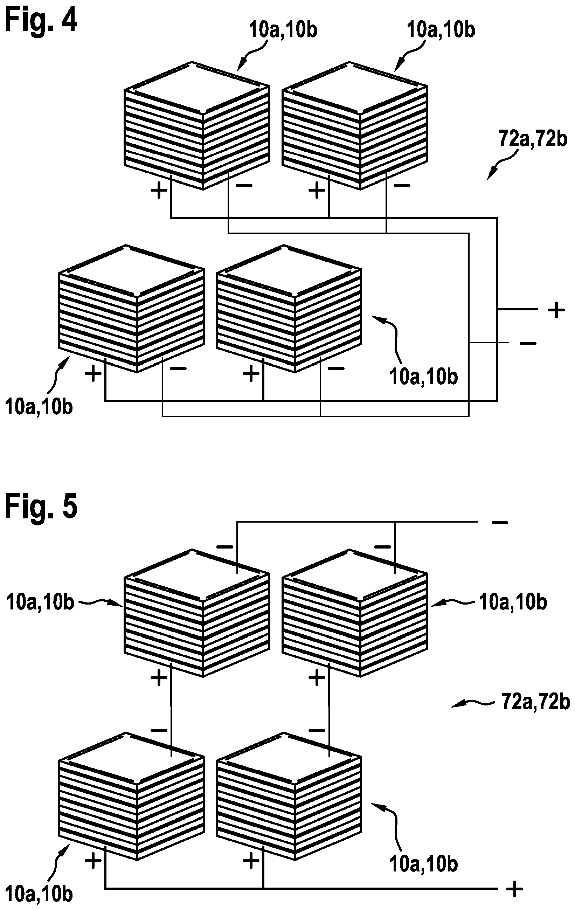

Die Figuren 4 und 5 zeigen jeweils ein beispielhaftes Brennstoffzellensystem 72a, 72b mit einer Mehrzahl von elektrisch miteinander verschalteten Brennstoffzellenstacks 10a, 10b. Die Brennstoffzellenstacks 10a, 10b können wie in Figur 4 dargestellt elektrisch parallelgeschaltet sein. Alternativ ist auch eine elektrische serielle Verschaltung der Brennstoffzellenstacks 10a, 10b denkbar. Ferner ist ebenso eine wie in Figur 5 gezeigte gemischte Parallel- und Reihenschaltung der Brennstoffzellenstacks 10a, 10b möglich.

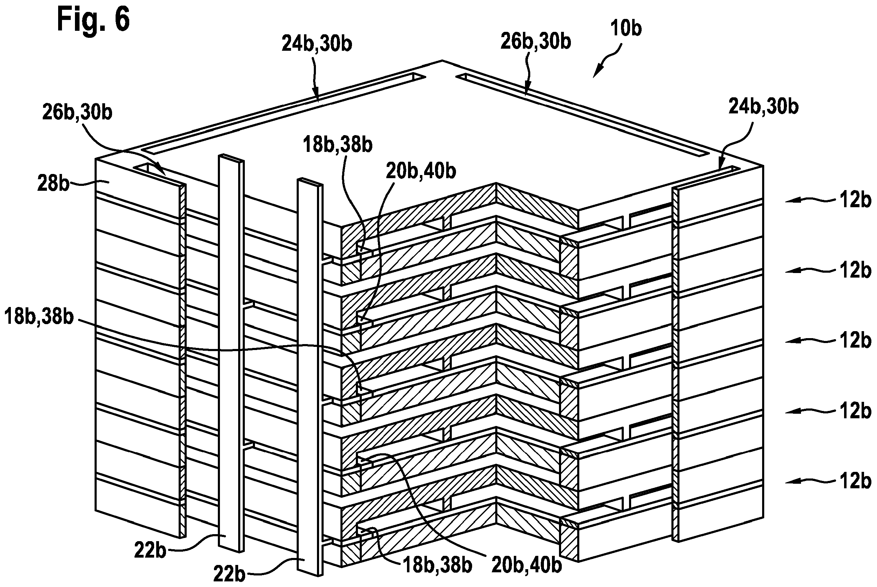

In Figur 6 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figur 3, verwiesen werden kann. Zur Unterscheidung der Ausführungsbeispiele ist der Buchstabe a den Bezugszeichen des Ausführungsbeispiels in Figur 3 nachgestellt. In dem Ausführungsbeispiel der Figur 6 ist der Buchstabe a durch den Buchstaben b ersetzt.

Figur 6 zeigt eine Teilschnittdarstellung eines alternativen Brennstoffzellenstacks 10b. Der Brennstoffzellenstack 10b umfasst hier beispielhaft fünf identisch ausgebildete Brennstoffzelleneinheiten 12b. Die Brennstoffzelleneinheiten 12b sind elektrisch und fluidtechnisch miteinander verschaltet. Die Brennstoffzelleneinheiten 12b weisen in Randbereichen 28b Ausnehmungen 30b auf, welche innerhalb des Brennstoffzellenstacks 10a zu Brenngaskanälen 24b oder Oxidationsgaskanälen 26b verbunden sind. Die Zellebenen 14b der Brennstoffzelleneinheiten 12b sind elektrisch miteinander verschaltet. Der Brennstoffzellenstack 10b weist eine Mehrzahl von Stromableitern 22b auf, welche zumindest teilweise in zumindest einem Brenngaskanal 24b und/oder in zumindest einem Oxidationsgaskanal 26b verlaufen können. Alternativ können die Stromableiter 22b auch zumindest teilweise außerhalb der Brennstoffzelleneinheiten 12b verlaufen. Die Stromableiter 22b sind zumindest teilweise zwischen den plattenartigen Elementen 32b, 34b der Brennstoffzelleneinheiten 12b angeordnet. Die Stromableiter 22b sind insbesondere bereits während eines Sintervorgangs zur Verbindung der plattenartigen Elemente 32b, 34b zwischen den plattenartigen Elementen 32b, 34b angeordnet. Hierdurch kann eine vorteilhafte mechanische Fixierung der Stromableiter 22b erreicht werden. Die Stromableiter 22b sind elektrisch leitenden mit den Leitstreifen 18b, 20b der Zellebenen 14b verbunden. Insbesondere können die Stromableiter 22b mittels eines Löt-, Schweiß- und/oder Pressprozesses mit den Leitstreifen 18b, 20b der Zellebenen 14b verbunden sein. Die Stromableiter 22b können insbesondere zumindest teilweise als Metallbleche, Metallstifte, Metallbänder, Metalldrähte und/oder Metalllitzen ausgebildet sein. Innerhalb eines Brenngaskanals 24b verlaufende Stromableiter bestehen zumindest im Wesentlichen aus einem insbesondere im Wesentlichen reduktionsbeständigen Material. Innerhalb eines Brenngaskanals 24b verlaufende Stromableiter 22b können insbesondere zumindest im Wesentlichen aus Nickel bestehen. Innerhalb eines Oxidationsgaskanals 26b oder außerhalb der Brennstoffzelleneinheit 12b verlaufende Stromableiter bestehen zumindest im Wesentlichen aus einem insbesondere im Wesentlichen oxidationsbeständigen Material. Innerhalb eines Oxidationsgaskanals 26b oder außerhalb der Brennstoffzelleneinheiten 12b verlaufende Stromableiter 22b können insbesondere zumindest im Wesentlichen aus einem ferritischen Hochtemperatur-Edelstahl, beispielsweise Crofer 22 H oder Crofer 22 APU, einer korrosionsbeständigen Nickelbasislegierung und/oder Platin bestehen. Die Brennstoffzelleneinheiten 12b sind derart innerhalb des Brennstoffzellenstacks 10b angeordnet, dass jeweils unterschiedliche elektrische Pole 38b, 40b der Brennstoffzelleneinheiten 12b übereinanderliegen. Benachbarte Brennstoffzelleneinheiten 12b sind jeweils um 180° gedreht zueinander angeordnet, sodass positive Pole 38b und negative Pole 40b der Brennstoffzelleneinheit 12b im Wechsel übereinander angeordnet sind. Die Brennstoffzelleneinheiten 12b sind elektrisch parallel miteinander verschaltet.

## Patentansprüche

1. Brennstoffzellenstack mit zumindest zwei übereinander angeordneten planaren Brennstoffzelleneinheiten (12a; 12b), welche jeweils zumindest eine Zellebene (14a; 14b) mit einer eine Mehrzahl von zumindest im Wesentlichen in einer Ebene angeordneten und elektrisch miteinander verschalteten Einzelzellen (16a; 16b) aufweist, wobei die Zellebenen (14a; 14b) der Brennstoffzelleneinheiten (12a; 12b) elektrisch miteinander verschaltet sind, **gekennzeichnet durch** eine Mehrzahl von Stromableitern (22a; 22b), welche dazu vorgesehen sind, die Zellebenen (14a; 14b) der Brennstoffzelleneinheiten (12a; 12b) elektrisch leitend miteinander zu verbinden und welche zumindest teilweise in zumindest einem Brenngaskanal (24a; 24b) und/oder in zumindest einem Oxidationsgaskanal (26a; 26b) verlaufen.

2. Brennstoffzellenstack nach Anspruch 1, **dadurch gekennzeichnet, dass** die Zellebenen (14a; 14b) jeweils zumindest zwei elektrische Leitstreifen (18a, 20a; 18b, 20b) aufweisen, welche jeweils mit zumindest einem weiteren elektrischen Leitstreifen (18a, 20a; 18b, 20b) zumindest einer weiteren Zellebene (14a; 14b) elektrisch verbunden sind.

3. Brennstoffzellenstack nach Anspruch 1 oder 2, **gekennzeichnet durch** eine Mehrzahl von Stromableitern (22a; 22b), welche dazu vorgesehen sind, die Zellebenen (14a; 14b) der Brennstoffzelleneinheiten (12a; 12b) elektrisch leitend miteinander zu verbinden.

4. Brennstoffzellenstack nach einem der vorhergehenden Ansprüche,
**dadurch gekennzeichnet, dass** die Brennstoffzelleneinheiten (12a; 12b) in ihren Randbereichen (28a; 28b) Ausnehmungen (30a; 30b) aufweisen, welche in einem montierten Zustand zu zumindest einen Brenngaskanal (24a; 24b) und/oder zumindest einem Oxidationsgaskanal (26a; 26b) verbunden sind, wobei Stromableiter (22a; 22b), welche dazu vorgesehen sind, die Zellebenen (14a; 14b) der Brennstoffzelleneinheiten (12a; 12b) elektrisch leitend miteinander zu verbinden, zumindest teilweise in zumindest einem Brenngaskanal (24a; 24b) und/oder in zumindest einem Oxidationsgaskanal (26a; 26b) verlaufen.

5. Brennstoffzellenstack nach einem der Ansprüche 3 bis 4 **dadurch gekennzeichnet, dass** die Brennstoffzelleneinheiten (12a; 12b) jeweils ein erstes plattenartiges Element (32a; 32b) und zumindest ein zweites plattenartiges Element (34a; 34b) aufweisen, welche gemeinsam einen Gasraum (36a; 36b) zumindest im Wesentlichen definieren, wobei die Stromableiter (22a; 22b) zumindest teilweise zwischen den plattenartigen Elementen (32a, 34a; 32b, 34b) angeordnet sind.

6. Brennstoffzellenstack nach einem der vorhergehenden Ansprüche,
**dadurch gekennzeichnet, dass** die Brennstoffzelleneinheiten (12a; 12b) derart angeordnet sind, dass jeweils unterschiedliche elektrische Pole (38a; 40a; 38b; 40b) der Brennstoffzelleneinheiten (12a; 12b) übereinanderliegen.

7. Brennstoffzelleneinheit für einen Brennstoffzellenstack (10a; 10b) nach einem der vorhergehenden Ansprüche, **gekennzeichnet durch** zumindest eine Zellebene (14a; 14b) mit einer Mehrzahl von zumindest im Wesentlichen in einer Ebene angeordneten und elektrisch miteinander verschalteten Einzelzellen (16a; 16b).

8. Brennstoffzellensystem mit zumindest zwei elektrisch miteinander verschalteten Brennstoffzellenstacks (10a; 10b) nach einem der Ansprüche 1 bis 7

## Claims

1. Fuel cell stack with at least two planar fuel cell stack units (12a; 12b) which are arranged above one another and in each case have at least one cell level (14a; 14b) with a plurality of individual cells (16a; 16b) which are arranged at least substantially in one plane and are connected electrically to one another, the cell levels (14a; 14b) of the fuel cell units (12a; 12b) being connected electrically to one another, **characterized by** a plurality of current collectors (22a; 22b) which are provided to connect the cell levels (14a; 14b) of the fuel cell units (12a; 12b) to one another in an electrically conducting manner, and which run at least partially in at least one fuel gas duct (24a; 24b) and/or in at least one oxidation gas duct (26a; 26b).

2. Fuel cell stack according to Claim 1, **characterized in that** the cell levels (14a; 14b) in each case have at least two electric conductive strips (18a, 20a; 18b, 20b) which are electrically connected in each case to at least one further electric conductive strip (18a, 20a; 18b, 20b) of at least one further cell level (14a; 14b).

3. Fuel cell stack according to Claim 1 or 2, **characterized by** a plurality of current collectors (22a; 22b) which are provided to connect the cell levels (14a; 14b) of the fuel cell unit (12a; 12b) to one another in an electrically conducting manner.

4. Fuel cell stack according to one of the preceding claims, **characterized in that** the fuel cell units (12a; 12b) have, in their edge regions (28a; 28b), recesses (30a; 30b) which, in a mounted state, are connected to at least one fuel gas duct (24a; 24b) and/or at least one oxidation gas duct (26a; 26b), current collectors (22a; 22b) which are provided to connect the cell levels (14a; 14b) of the fuel cell unit (12a; 12b) to one another in an electrically conducting manner running at least partially in at least one fuel gas duct (24a; 24b) and/or in at least one oxidation gas duct (26a; 26b).

5. Fuel cell stack according to either of Claims 3 or 4, **characterized in that** the fuel cell units (12a; 12b) in each case have a first plate-like element (32a; 32b) and at least one second plate-like element (34a; 34b) which together at least substantially define a gas space (36a; 36b), the current collectors (22a; 22b) being arranged at least partially between the plate-like elements (32a, 34a; 32b, 34b).

6. Fuel cell stack according to one of the preceding claims, **characterized in that** the fuel cell units (12a; 12b) are arranged in such a way that different electric poles (38a; 40a; 38b; 40b) of the fuel cell units (12a; 12b) lie above one another in each case.

7. Fuel cell unit for a fuel cell stack (10a; 10b) according to one of the preceding claims, **characterized by** at least one cell level (14a; 14b) with a plurality of individual cells (16a; 16b) which are arranged at least substantially in one plane and are connected electrically to one another.

8. Fuel cell system with at least two fuel cell stacks (10a; 10b) according to one of Claims 1 to 7 which are connected electrically to one another.

## Revendications

1. Empilement de piles à combustible avec au moins deux unités de piles à combustible planes (12a ; 12b) agencées l'une au-dessus de l'autre, qui présentent chacune au moins un plan de piles (14a ; 14b) avec une pluralité de piles individuelles (16a ; 16b) agencées au moins essentiellement dans un plan et connectées électriquement entre elles, les plans de piles (14a ; 14b) des unités de piles à combustible (12a ; 12b) étant connectés électriquement entre eux, **caractérisé par** une pluralité de collecteurs de courant (22a ; 22b) qui sont prévus pour relier de manière électriquement conductrice entre eux les plans de piles (14a ; 14b) des unités de piles à combustible (12a ; 12b) et qui s'étendent au moins partiellement dans au moins un canal de gaz combustible (24a ; 24b) et/ou dans au moins un canal de gaz oxydant (26a ; 26b).

2. Empilement de piles à combustible selon la revendication 1, **caractérisé en ce que** les plans de piles (14a ; 14b) présentent chacun au moins deux bandes conductrices électriques (18a, 20a ; 18b, 20b), qui sont chacune reliées électriquement à au moins une autre bande conductrice électrique (18a, 20a ; 18b, 20b) d'au moins un autre plan de piles (14a ; 14b).

3. Empilement de piles à combustible selon la revendication 1 ou 2, **caractérisé par** une pluralité de collecteurs de courant (22a ; 22b), qui sont prévus pour relier de manière électriquement conductrice entre eux les plans de piles (14a ; 14b) des unités de piles à combustible (12a ; 12b).

4. Empilement de piles à combustible selon l'une quelconque des revendications précédentes, **caractérisé en ce que** les unités de piles à combustible (12a ; 12b) présentent dans leurs zones de bord (28a ; 28b) des évidements (30a ; 30b) qui, à un état monté, sont reliés en au moins un canal de gaz combustible (24a ; 24b) et/ou au moins un canal de gaz oxydant (26a ; 26b), des collecteurs de courant (22a ; 22b), qui sont prévus pour relier de manière électriquement conductrice entre eux les plans de piles (14a ; 14b) des unités de piles à combustible (12a ; 12b), s'étendant au moins partiellement dans au moins un canal de gaz combustible (24a ; 24b) et/ou dans au moins un canal de gaz oxydant (26a ; 26b).

5. Empilement de piles à combustible selon l'une quelconque des revendications 3 à 4, **caractérisé en ce que** les unités de piles à combustible (12a ; 12b) présentent chacune un premier élément de type plaque (32a ; 32b) et au moins un deuxième élément de type plaque (34a ; 34b), qui définissent ensemble au moins essentiellement un espace gazeux (36a ; 36b), les collecteurs de courant (22a ; 22b) étant agencés au moins partiellement entre les éléments de type plaque (32a, 34a ; 32b, 34b).

6. Empilement de piles à combustible selon l'une quelconque des revendications précédentes, **caractérisé en ce que** les unités de piles à combustible (12a ; 12b) sont agencées de telle sorte que des pôles électriques différents (38a ; 40a ; 38b ; 40b) des unités de piles à combustible (12a ; 12b) se superposent respectivement.

7. Unité de piles à combustible pour un empilement de piles à combustible (10a ; 10b) selon l'une quelconque des revendications précédentes, **caractérisée par** au moins un plan de piles (14a ; 14b) avec une pluralité de piles individuelles (16a ; 16b) agencées au moins essentiellement dans un plan et connectées électriquement entre elles.

8. Système de piles à combustible avec au moins deux empilements de piles à combustible (10a ; 10b) connectés électriquement entre eux selon l'une quelconque des revendications 1 à 7.
